# EUROPÄISCHE PATENTSCHRIFT

(11) **EP 4 548 415 B1**
(45) Veröffentlichungstag und Bekanntmachung des Hinweises auf die Patenterteilung: **24.12.2025**
(21) Anmeldenummer: 23758221.8
(22) Anmeldetag: 27.07.2023
(51) Int. Cl.: H01M 8/04082, H01M 8/2484

(54) **BRENNSTOFFZELLENSYSTEM MIT EINEM BRENNSTOFFZELLENSTAPEL UND EINER STRÖMUNGSANORDNUNG ZUM ZUFÜHREN EINES MEDIENSTROMS ZUM BRENNSTOFFZELLENSTAPEL**
FUEL CELL SYSTEM WITH A FUEL CELL STACK AND A FLUID MANIFOLD FOR MEDIA SUPPLY TO INLETS OF FUEL CELL STACKS
SYSTÈME DE PILE À COMBUSTIBLE AVEC UN EMPILEMENT DES PILES À COMBUSTIBLE ET DISPOSITIF POUR LA DISTRIBUTION DE FLUIDE AUX APERTURES DES PILES À COMBUSTIBLE

(30) Priorität: 28.07.2022 AT 505732022
(43) Veröffentlichungstag der Anmeldung: 07.05.2025
(73) Patentinhaber: AVL List GmbH, 8020 Graz (AT)
(72) Erfinder: PÖSCHL, Robert, 8111 Gratwein-Straßengel (AT)
(86) Internationale Anmeldenummer: PCT/AT2023/060252
(87) Internationale Veröffentlichungsnummer: WO 2024/020614

(56) Entgegenhaltungen:
- EP-A1- 3 331 080
- EP-A2- 1 515 383
- WO-A1-2010/056231
- US-A- 4 670 361
- US-A1- 2004 247 982
- US-B2- 8 802 311

## Beschreibung

Die vorliegende Erfindung betrifft ein Brennstoffzellensystem mit einem Brennstoffzellenstapel und mit einer Strömungsanordnung zum Zuführen eines Medienstroms zum Brennstoffzellenstapel, wobei die Strömungsanordnung einen strömungstechnisch mit dem Brennstoffzellenstapel verbundenen Strömungsabschnitt aufweist.

Bei einem solchen Brennstoffzellenstapel mit der entsprechenden Strömungsanordnung ist das Problem bekannt, dass äußere Brennstoffzellen in dem Brennstoffzellenstapel nur wenig oder mit Unterschiedlichen Temperaturen von dem Medienstrom, den die Strömungsanordnung zuführt, getroffen werden. Folglich ist es wünschenswert, alle Brennstoffzellen möglichst gleichmäßig mit dem zur Verfügung gestellten Medienstrom zu versorgen.

Brennstoffzellensysteme mit einem Brennstoffzellenstapel und mit einer Strömungsanordnung zum Zuführen eines Medienstroms zum Brennstoffzellenstapel sind beispielsweise aus der EP 3331080 A1 und der WO 2010056231 A1 bekannt.

Es ist Aufgabe der vorliegenden Erfindung, die voranstehend beschriebenen Nachteile zumindest teilweise zu beheben. Insbesondere ist es Aufgabe der vorliegenden Erfindung, in kostengünstiger und einfacher Weise, einen Medienstrom mit größtmöglicher Gleichverteilung an den einzelnen Brennstoffzellen des Brennstoffzellenstapels zur Verfügung zu stellen.

Die voranstehende Aufgabe wird gelöst durch ein Brennstoffzellensystem mit den Merkmalen des Anspruchs 1 gelöst. Weitere Merkmale und Details der Erfindung ergeben sich aus den Unteransprüchen, der Beschreibung und den Zeichnungen.

Erfindungsgemäß ist ein Brennstoffzellensystem mit einem Brennstoffzellenstapel und einer Strömungsanordnung zum Zuführen eines Medienstroms zum Brennstoffzellenstapel vorgesehen, wobei die Strömungsanordnung einen strömungstechnisch mit dem Brennstoffzellenstapel verbundenen Strömungsabschnitt aufweist. Die Strömungsanordnung weist ferner einen in dem Strömungsabschnitt angeordneten Strömungseinsatz auf, welcher sich mit seiner Haupterstreckungsrichtung entlang des Strömungsabschnittes erstreckt, einen Strömungseinlass zum Einlassen des Medienstroms aufweist und zumindest eine Strömungsausnehmung aufweist, welche an einer dem Brennstoffzellenstapel abgewandten Strömungseinsatz-Seite des Strömungseinsatzes ausgebildet ist.

Erfindungsgemäß wird damit die Aufgabe durch das Verwenden eines Strömungseinsatzes in dem Strömungsabschnitt der Strömungsanordnung gelöst. Dieser Strömungseinsatz ist zum gleichverteilten Zuführen des Medienstroms an die einzelnen Brennstoffzellen des Brennstoffzellenstapels eingerichtet. Die Gleichverteilung des Medienstroms wird dabei über die zumindest eine Strömungsausnehmung bereitgestellt, da der Medienstrom über die zumindest eine Strömungsausnehmung kontrolliert ausgeströmt wird, an einer Innenwandung des Strömungsabschnitts, die der dem Brennstoffzellenstapel abgewandten Strömungseinsatz-Seite zugewandt ist, abprallt und in entgegengesetzte Richtung auf den Brennstoffzellenstapel umgelenkt wird, wobei insbesondere der Strömungseinsatz umströmt wird. Durch die Führung des Medienstroms innerhalb des Strömungseinsatzes wird dabei verhindert, dass der Medienstrom ungleichmäßig innerhalb des Strömungsabschnitts zu einzelnen Brennstoffzellen des Brennstoffzellenstapels abströmt, während er zu anderen Brennstoffzellen nicht oder nur in geringem Maße, insbesondere mit verringerte Masse, Geschwindigkeit und/oder Temperatur gelangt. Durch den Einsatz der erfindungsgemäßen Strömungsanordnung wird es also möglich, den durch die Einlassöffnung in den Strömungseinsatz eingeströmten Medienstrom gleichmäßiger, insbesondere hinsichtlich der Masse, Temperatur und/oder Geschwindigkeit des Medienstroms, an die einzelnen Brennstoffzellen des Brennstoffzellenstapels zu verteilen. Soweit hierin von Gleichverteilung gesprochen wird, ist nicht zwangsläufig eine mathematisch perfekte Gleichverteilung zu verstehen, da eine solche praktisch nicht realisierbar ist. Vielmehr ist gemeint, dass die maximale oder bestmögliche Gleichverteilung des Medienstroms an die Brennstoffzellen des Brennstoffzellenstapels zu erzielen versucht wird. Ein weiterer durch die Erfindung erzielter Vorteil ist, dass der Medienstrom mit größtmöglicher Gleichverteilung nur durch Ergänzung von Strömungsführungselementen an den einzelnen Brennstoffzellen des Brennstoffzellenstapels geführt wird, ohne dass eine individuelle Anpassung der einzelnen identen Brennstoffzellen notwendig ist.

Das Brennstoffzellensystem kann neben einem Brennstoffzellenstapel und einer Strömungsanordnung selbstverständlich weitere Peripherie und Vorrichtungen zum Betreiben der einzelnen Brennstoffzellenstapel umfassen. Dazu können beispielsweise Ventile, Pumpen, Rezirkulationsgebläse usw. gehören, beispielsweise um den Medienstrom zur Strömungsanordnung zuzuführen. Ferner können auch mehr als ein Brennstoffzellenstapel und/oder mehr als eine Strömungsanordnung in dem Brennstoffzellensystem vorgesehen sein.

Außerdem können der Strömungseinsatz und der Strömungsabschnitt wahlweise separate, insbesondere einstückige, Bauteile oder eine integral hergestellte Strömungsanordnung sein. Die erste Variante hat den Vorteil, dass so eine einfache Nachrüstbarkeit bei bestehenden Strömungsabschnitten gegeben ist, in dem diese mit dem Strömungseinsatz ausgestattet werden, der in dem Strömungsabschnitt befestigt werden kann. Die zweite Variante hat den Vorteil einer einfachen Herstellung, beispielsweise durch Nutzung eines 3D-Druckverfahrens. Der Strömungsabschnitt kann mit Vorteil auch als Gehäuse ausgebildet sein.

Die Haupterstreckungsrichtung des Strömungseinsatzes kann insbesondere eine Längserstreckungsrichtung sein, entlang derer sich der Strömungseinsatz seiner Länge nach erstreckt und senkrecht dazu seiner Breite nach erstreckt. Zudem kann die Haupterstreckungsrichtung, insbesondere Längserstreckungsrichtung, des Strömungseinsatzes mit derjenigen des Strömungsabschnittes zusammenfallen.

Es kann bevorzugt sein, dass die zumindest eine Strömungsausnehmung auf eine Innenwandung des Strömungsabschnitts ausgerichtet ist. Dadurch kann sichergestellt werden, dass der aus der zumindest einen Strömungsausnehmung austretende Medienstrom an dem Strömungsabschnitt abprallt und seine Richtung zum Brennstoffzellenstapel hin umgekehrt. Es hat sich gezeigt, dass dadurch ein umströmter Strömungseinsatz bereitgestellt wird, welcher eine gleichmäßigere Verteilung des Medienstroms an dem Brennstoffzellenstapel und damit eine gleichmäßigere Medienversorgung an allen Brennstoffzellen des Brennstoffzellenstapels ermöglicht.

Zudem kann bevorzugt sein, dass die zumindest eine Strömungsausnehmung ihrer Länge nach entlang der Haupterstreckungsrichtung des Strömungseinsatzes erstreckt ist. So kann der Medienstrom über die Länge des Strömungseinsatzes möglichst gleichmäßig ausgeströmt werden, sodass auch die gewünschte gleichmäßige Medienversorgung an den einzelnen Brennstoffzellen ermöglicht wird, die entlang der Haupterstreckungsrichtung aufeinander gestapelt sein können.

Weiterhin kann bevorzugt sein, dass mehrere Strömungsausnehmungen in dem Strömungseinsatz ausgebildet sind, welche entlang der Haupterstreckungsrichtung des Strömungseinsatzes voneinander beabstandet sind. Durch das Vorsehen von mehreren Strömungsausnehmungen, beispielsweise zwei, drei, vier oder mehr Strömungsausnehmungen, kann die Gleichverteilung des Medienstroms an dem Brennstoffzellenstapel weiter verbessert werden. Durch die Beabstandung voneinander, die insbesondere eine gleichmäßige Beabstandung sein kann, wird dabei eine gegenseitige Beeinflussung der einzelnen Teilmedienströme, in die der Medienstrom im Strömungseinsatz durch die Strömungsausnehmungen unterteilt werden kann und welche aus den Strömungsausnehmungen austreten, weitestgehend vermieden oder minimiert, sodass diese strömungsoptimiert den einzelnen Brennstoffzellen zugeführt werden können. Alternativ kann aber auch eine einzige, ihrer Länge nach in Haupterstreckungsrichtung erstreckte, Strömungsausnehmung vorgesehen sein, wie später näher anhand weiterer vorteilhafter Merkmale erläutert wird.

Außerdem kann bevorzugt sein, dass an dem Strömungseinsatz zumindest ein erstes Strömungsleitelement angeordnet ist, welches von der zumindest einen Strömungsausnehmung nach innerhalb des Strömungseinsatzes erstreckt ist. Das Strömungsleitelement kann dem Medienstrom so vorteilhafterweise eine Strömungsrichtung aufprägen. Die Strömungsmenge wiederum kann durch die Dimensionierung der Strömungsausnehmung oder der Strömungsausnehmungen festgelegt werden.

Neben dem ersten Strömungsleitelement wird hierin auch von einem zweiten Strömungsleitelement gesprochen, welches später näher erläutert wird und sich insbesondere hinsichtlich seiner Position oder Anordnung in der Strömungsanordnung unterscheiden kann. Die Bezeichnung als erstes oder zweites Strömungsleitelement dient hierin nur zur Unterscheidung der beiden Strömungsleitelemente und stellt keine Einschränkung dar. Beispielsweise ist es nicht gefordert, dass ein erstes Strömungsleitelement vorhanden ist, wenn von einem zweiten Strömungsleitelement gesprochen werden.

Dabei kann bevorzugt sein, dass das zumindest eine erste Strömungsleitelement einen von innerhalb des Strömungseinsatzes zu der zumindest einen Strömungsausnehmung führenden Strömungsschlitz ausbildet. Damit erhält die Strömungsausnehmung neben ihrer Erstreckung um den Strömungseinsatz herum auch eine Erstreckung in den Strömungseinsatz hinein. Der Medienstrom muss zum Verlassen des Strömungseinsatzes durch den Strömungsschlitz hindurchströmen. Dabei kann der Strömungsschlitz ganz besonders von zwei einander gegenüberliegenden, insbesondere parallel zueinander stehenden, ersten Strömungsleitelementen ausgebildet werden. Vorteil des Strömungsschlitzes ist, dass er einen schmalen Spalt dazwischen ausbilden kann, welcher ein axiales Strömungsmoment des Medienstroms durch den Strömungseinsatz brechen kann und so die radiale Strömung des Medienstroms nach außen durch die Strömungsausnehmungen begrenzen kann.

Hierbei kann bevorzugt sein, dass der Strömungsschlitz im Wesentlichen durchgehend innerhalb des Strömungsabschnitts entlang der Haupterstreckungsrichtung des Strömungseinsatzes ausgebildet ist. Mit anderen Worten kann sich der Strömungsschlitz im Wesentlichen entlang der gesamten Länge des Strömungseinsatzes, die im Strömungsabschnitt verläuft, erstrecken. Dadurch kann der Medienstrom über die gesamte Länge des Strömungsabschnitts gleichmäßig austreten und zum Brennstoffzellenstapel strömen. Dabei kann der Strömungsabschnitt seiner Erstreckung, insbesondere Länge nach, korrespondierend zum daran angeordneten Brennstoffzellenstapel ausgebildet sein.

Ferner kann hierbei bevorzugt sein, dass der Strömungsschlitz entlang der Haupterstreckungsrichtung des Strömungseinsatzes in Richtung zum Strömungsabschnitt hin oder, mit anderen Worten, nach außen geneigte Innenkanten aufweist. Dadurch kann auf einfache Art und Weise eine Drosselung des Medienstroms durch den Strömungsschlitz erzielt werden.

Erfindungsgemäß ist es vorgesehen, dass die dem Brennstoffzellenstapel abgewandten Strömungseinsatz-Seite entlang der Haupterstreckungsrichtung des Strömungseinsatzes zum Brennstoffzellenstapel hin geneigt ist. Diese Neigung kann insbesondere gegenüber einer im Wesentlichen geraden Innenkante des Strömungsschlitzes bzw. seines zumindest einen Strömungsleitelements ausgebildet sein. Auch dadurch kann auf einfache Art und Weise eine Drosselung des Medienstroms durch den Strömungsschlitz erzielt werden.

Außerdem kann bevorzugt sein, dass an der zumindest einen Strömungsausnehmung zumindest ein zweites Strömungsleitelement zum Erzeugen eines um zumindest einen Teil des Strömungseinsatzes herum und zum Brennstoffzellenstapel führenden Strömungswirbels des Medienstroms ausgebildet ist. Das zweite Strömungsleitelement können wahlweise gerade, geneigt (gegenüber der Haupterstreckungsachse des Strömungseinsatzes) und/oder gekrümmt (insbesondere in Richtung von dem Brennstoffzellenstapel weg) sein. Ferner kann das Strömungsleitelement an der zuvor erwähnten abgewandten Strömungseinsatz-Seite angeordnet sein oder aber alternativ an einer dem Brennstoffzellenstapel zugewandten Strömungseinsatz-Seite angeordnet sein. Selbstverständlich sind auch Positionen dazwischen möglich. Durch das zumindest eine zweite Strömungsleitelement ist eine kontrollierte Strömungsleitung ermöglicht, um ungewünschte Verwirbelungen oder Vermischungen von Teilmedienströmen aus der zumindest einen Strömungsausnehmung heraus zu verhindern. Die Länge und der Drall des erzeugten und gewünschten Strömungswirbels sind dabei über die Position des zumindest einen Strömungsleitelements einerseits und seine Formgebung, wie zuvor beschrieben beispielsweise geneigt und/oder gekrümmt, andererseits einstellbar. Der Impuls des Medienstroms wird dabei umgelenkt. Dadurch wird ein erwünschter und kontrollierter Strömungswirbel um den Strömungseinsatz herum zwischen der Innenwandung des Strömungsabschnitts und dem Strömungseinsatz zur weiteren Verbesserung der Gleichverteilung des Medienstroms an den Brennstoffzellenstapel bereitgestellt.

Vorteilhaft kann es auch sein, wenn das zweite Strömungsleitelement am Strömungseinsatz oder am Strömungsabschnitt angeordnet oder befestigt ist.

Im Übrigen kann auch bevorzugt sein, dass in dem Strömungseinsatz quer, insbesondere senkrecht, zu der Haupterstreckungsrichtung des Strömungseinsatzes mehrere Strömungsausnehmungen ausgebildet sind. Folglich können alternativ oder zusätzlich zu Strömungsausnehmungen längs der Haupterstreckungsrichtung quer dazu Strömungsausnehmungen, beispielsweise zwei, drei, vier oder mehr vorgesehen sein. Auch dies kann die Gleichverteilung des Medienstroms an dem Brennstoffzellenstapel verbessern, wobei hierbei ggf. mehr Druckabfall an den Strömungsausnehmungen zu erwarten ist.

Auch kann bevorzugt sein, dass die zumindest eine Strömungsausnehmungen als ein Schlitze und/oder eine Perforierung in dem Strömungseinsatz ausgebildet ist. Der Schlitz kann beispielsweise eine rechteckige, runde, ovale oder ähnliche Form aufweisen. Ein Schlitz kann eine größere Erstreckung in Längsrichtung als in Breitenrichtung aufweisen. Er ist besonders einfach in dem Strömungseinsatz herzustellen und kann einen begrenzten Strömungsquerschnitt aufweisen, um nicht sämtlichen Medienstrom in dem Strömungseinsatz ausströmen zu lassen, sondern nur eine kontrollierte und begrenzte Strömungsmenge.

Bevorzugt kann ferner sein, dass die zumindest eine Zwischen-Strömungsausnehmung als ein Schlitz in dem Strömungseinsatz ausgebildet ist. Der Schlitz kann beispielsweise einen rechteckigen, ovalen oder ähnlichen länglichen Querschnitt aufweisen. Ein Schlitz weist eine größere Erstreckung in Längsrichtung als in Breitenrichtung aufweisen. Er ist besonders einfach in dem Strömungseinsatz herzustellen und kann einen begrenzten Strömungsquerschnitt aufweisen, um nicht sämtlichen Medienstrom in dem Strömungseinsatz ausströmen zu lassen, sondern nur eine kontrollierte und begrenzte Strömungsmenge. Eine Perforierung kann beispielsweise einen runden oder ovalen Querschnitt aufweisen.

Bevorzugt kann auch sein, dass der Strömungsabschnitt und/oder der Strömungseinsatz ein Rohr ist. Die Ausgestaltung als Rohr ist vergleichsweise unkompliziert und besonders kostengünstig. Dabei sind verschiedene Querschnitte des Strömungsabschnitts und/oder des Strömungseinsatzes denkbar, beispielsweise rund, eckig, oval, herzförmig, eine Mischung aus den vorstehenden oder ähnlich.

Insbesondere ist der Strömungseinsatz vom Strömungsabschnitt beabstandet, ganz besonders allseitig oder radial beabstandet ist. Insbesondere kann bevorzugt sein, dass der Strömungseinsatz konzentrisch, insbesondere koaxial, zum Strömungsabschnitt angeordnet ist. So kann ein gleichmäßiger Abstand zwischen dem Strömungsabschnitt, insbesondere seiner Innenwandung und dem Strömungseinsatz erzielt werden, die von dem Medienstrom durchströmt werden kann, um zu dem Brennstoffzellenstapel zu gelangen.

Schließlich kann bevorzugt sein, dass der Strömungsabschnitt an einer Luftseite oder an einer Brennstoffseite des Brennstoffzellenstapels angeordnet ist.

Weitere Vorteile, Merkmale und Einzelheiten der Erfindung ergeben sich aus der nachfolgenden Beschreibung, in der unter Bezugnahme auf die Zeichnungen Ausführungsbeispiele im Einzelnen beschreiben sind. Es zeigen schematisch:
- Fig. 1a: eine vertikale Querschnittsansicht durch ein Brennstoffzellensystem gemäß einem ersten Ausführungsbeispiel der Erfindung,
- Fig. 1b: eine horizontale Querschnittsansicht durch das Brennstoffzellensystem der Fig. 1a,
- Fig. 2: eine vertikale Querschnittsansicht durch ein Brennstoffzellensystem gemäß einem zweiten Ausführungsbeispiel der Erfindung,
- Fig. 3: eine vertikale Querschnittsansicht durch ein Brennstoffzellensystem gemäß einem dritten Ausführungsbeispiel der Erfindung,
- Fig. 4a: eine vertikale Querschnittsansicht durch ein Brennstoffzellensystem gemäß einem vierten Ausführungsbeispiel der Erfindung,
- Fig. 4b: eine horizontale Querschnittsansicht durch das Brennstoffzellensystem der Fig. 4a,
- Fig. 5: eine vertikale Querschnittsansicht einer Strömungsanordnung gemäß einem fünften Ausführungsbeispiel der Erfindung, und
- Fig. 6: eine perspektivische Ansicht des Brennstoffzellensystems.

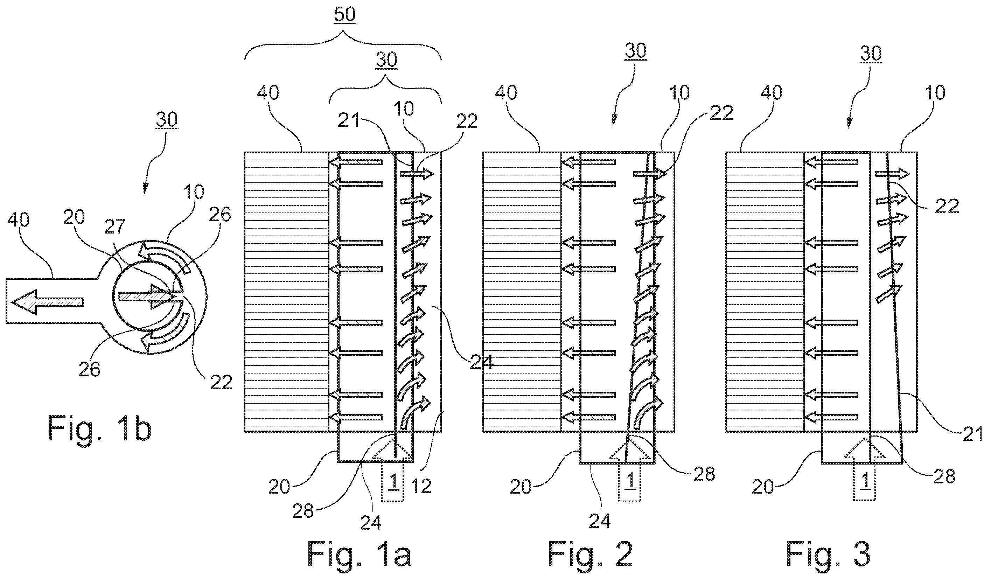

Identische oder funktionsgleiche Elemente sind in den Figuren 1 bis 6 jeweils mit demselben Bezugszeichen bezeichnet.

Figur 1a zeigt ein Ausführungsbeispiel eines erfindungsgemäßen Brennstoffzellensystems 50 mit einem Brennstoffzellenstapel 40 und einer Strömungsanordnung 30, in die ein Medienstrom 1 mittels einer Einlassöffnung 24 eingeströmt wird und über die Stapelhöhe der Brennstoffzellen des Brennstoffzellenstapels 40 direkt an den Brennstoffzellenstapel 40 zugeführt bzw. weitergeleitet wird. Der Brennstoffzellenstapel 40 kann beispielsweise ein Polymerelektrolytmembran- oder Feststoffoxid-Brennstoffzellenstapel sein.

Das Brennstoffzellensystem 50 ist in der Fig. 1a dabei, so wie seine Ausführungsbeispiele in den Fig. 2, 3 4a und 5, in einem vertikalen Querschnitt längs der Haupterstreckungsrichtung eines Strömungseinsatzes 20 gezeigt, der in einem Strömungsabschnitt 10 der Strömungsanordnung 30 angeordnet ist. Die Haupterstreckungsrichtung des Strömungseinsatzes 20 ist dabei auch eine Längserstreckungsrichtung und stimmt zudem mit der Strömungsrichtung des zugeführten Medienstroms 1 innerhalb des Strömungseinsatzes 20 überein.

Der Strömungseinsatz 20 ist dabei beabstandet von der Innenwandung 12 des Strömungsabschnitts 10 angeordnet. Insbesondere ist der Strömungseinsatz 20 konzentrisch innerhalb des Strömungsabschnitts 10 angeordnet.

Der Strömungsabschnitt 10 und/oder der Strömungseinsatz 20 können rohrförmig ausgebildet sein, wie in der Figur 1b in einem gegenüber der Fig. 1a horizontalen Querschnitt durch das Brennstoffzellensystem 50 für den Strömungsabschnitt 10 und den Strömungseinsatz 20 gezeigt ist. Rein beispielhaft sind die rohrförmigen Querschnitte des Strömungsabschnitts 10 und des Strömungseinsatzes 20 hier rund dargestellt, wobei eins davon oder beide alternativ aber auch beispielsweise rechteckig, elliptisch oder herzförmig sein können.

Wie in der Fig. 1a angedeutet ist, umfasst der Strömungseinsatz 20 einen Strömungseinlass 24 an seiner Unterseite, durch den der Medienstrom 1 in den Strömungseinsatz 20 und damit in den Strömungsabschnitt 10 eingelassen wird. So kann der Medienstrom 1, der beispielsweise Luft oder Brennstoff für den Brennstoffzellenstapel 40 beinhalten kann, in den Strömungseinsatz 20 eingeleitet werden und darin längs des Strömungsabschnitts 10 strömen.

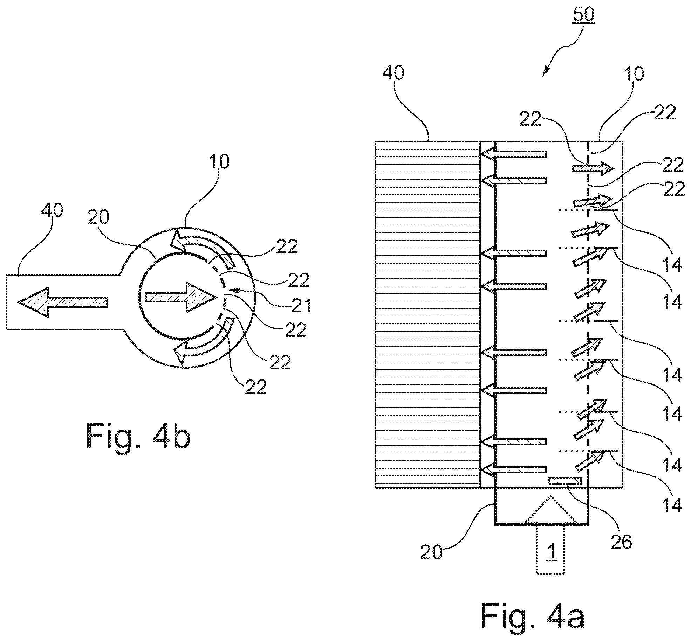

Der Strömungseinsatz 20 dieses Ausführungsbeispiels des Brennstoffzellensystems 50 weist eine Strömungsausnehmung 22 an einer dem Brennstoffzellenstapel 40 abgewandten Strömungseinsatz-Seite 21 auf, wobei sich die Strömungsausnehmung 22 hier beispielhaft im Wesentlichen durchgehend entlang der Länge des Strömungseinsatzes 20 erstreckt. Alternativ können längs des Strömungseinsatzes 20 voneinander beabstandete Strömungsausnehmungen 22 vorgesehen sein, wie beispielsweise in der Fig. 4a gezeigt ist.

In Fig. 1b ist dabei gezeigt, wie sich zwei erste Strömungsleitelemente 26 von der Strömungsausnehmung 22 nach innerhalb des Strömungseinsatzes 20 erstrecken und dadurch einen Strömungsschlitz 27 von der Mitte des Strömungseinsatzes 20 zu der Strömungsausnehmung 22 bilden, durch die der durch den Strömungseinlass 24 eintretende Medienstrom 1 kontrolliert und kontinuierlich über die gesamte Längserstreckung des Strömungseinsatzes 20 ausströmen kann. Dabei prallt der aus der Strömungsausnehmung 22 bzw. dem Strömungsschlitz 27 austretende Medienstrom 1, wie durch die entsprechenden Pfeile, welche Teilströmungsrichtungen des Medienstroms 1 darstellen, gekennzeichnet ist, an der Innenwandung 12 des Strömungsabschnitts 10 ab und wird zum Brennstoffzellenstapel 40 hin umgelenkt, wobei er den Strömungseinsatz 20 radial ausströmt und entlang dessen Mantelfläche strömt.

Figur 2 zeigt eine Abwandlung des Strömungseinsatzes 20 der Strömungsanordnung 30 der Fig. 1a und 1b, bei der Seitenkanten 28 der ersten Strömungsleitelemente 26 bzw. des Strömungsschlitzes 27 die Eintrittskannte in Richtung zum Strömungsabschnitt 10 hin geneigt sind.

Figur 3 zeigt eine Abwandlung des Strömungseinsatzes 20 der Strömungsanordnung 30 der Fig. 1a und 1b, bei der die dem Brennstoffzellenstapel 40 abgewandte Strömungseinsatz-Seite 21 zum Brennstoffzellenstapel 40 hin geneigt ist. Durch beide Ausführungsvarianten der Strömungseinsätze 20 der Fig. 2 und Fig. 3 wird eine unterschiedliche Drosselung des Medienstroms durch die unterschiedlichen Längen des Strömungsschlitz 27 entlang der Längserstreckung des Strömungseinsatzes 20bereitgestellt.

Figuren 4a und 4b zeigen alternative Ausführungsbeispiele der Strömungsanordnung 30 in einem Brennstoffzellensystem 50, bei dem mehrere Strömungsausnehmungen 22 (der Übersichtlichkeit halber sind hier nur einige bezeichnet) in Haupterstreckungsrichtung des Strömungseinsatzes 20 voneinander beabstandet sind. Wie Fig. 4b besonders gut erkennen lässt, sind zudem auch mehrere Strömungsausnehmungen 22 quer zur Haupterstreckungsrichtung des Strömungseinsatzes 20 vorgesehen, wobei diese hier beispielhaft als Perforierungen in dem Strömungseinsatz 20 ausgebildet sind, wohingegen diese als Schlitze in den Fig. 1a bis Fig. 3 ausgebildet sind.

Statt oder zusätzlich zu den ersten Strömungsleitelementen 26 (siehe unterstes Strömungsleitelement 26 in der Fig. 4a), die in dem Strömungseinsatz 20 angeordnet sind und insbesondere Teil, ganz besonders integraler Teil, des Strömungseinsatzes 20 sein können, sind in den Fig. 4a und 4b zweite Strömungsleitelemente 14 außerhalb des Strömungseinsatzes 20 vorgesehen. Die zweiten Strömungsleitelemente 14 sind jeweils den senkrecht zur Haupterstreckungsrichtung des Strömungseinsatzes 20 verlaufenden Strömungsausnehmungen 22 zugeordnet. Sie können den Strömungseinsatz 20 mit dem Strömungsabschnitt 10 verbinden und einstückig mit einem oder beiden ausgebildet sein. Sie erlauben eine optimierte Strömungsführung außerhalb des Strömungseinsatzes 20 im Spalt zwischen Strömungseinsatz 20 und Innenwandung 12 des Strömungsabschnitt 10 zu dem Brennstoffzellenstapel 40 hin. Die Strömungsleitelemente können dabei vorteilhaft am den Strömungseinsatz 20 oder auch am Strömungsabschnitts 10, beispielsweise kraftschlüssig oder stoffschlüssig, befestigt sein. Vorteilhaft ist es, wenn die Strömungsleitelemente immer deutlich dominanter sind als der verbleibende Spalt, wodurch eine Strömungsleitung begünstigt ist. Vorteilhaft beträgt eine Größe Spaltes nur etwa zwischen 5 % und 20 % der Größe des Strömungseinsatzes 20.

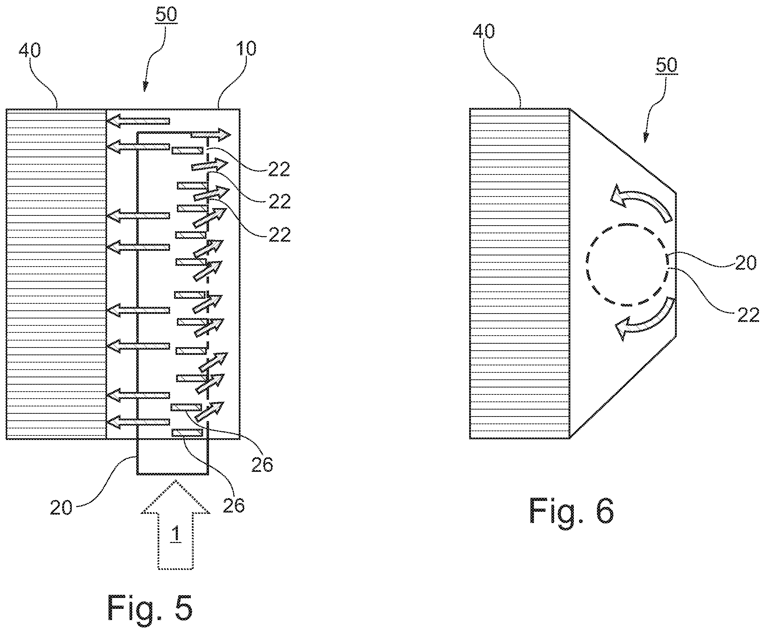

Figur 5 zeigt eine Abwandlung der Strömungsanordnung 30 der Fig. 4a und 4b, bei der die ersten Strömungsleitelemente 26 (der Übersichtlichkeit halber sind hier nur einige bezeichnet) aber keine zweiten Strömungsleitelemente 14 vorgesehen sind. Zudem erstreckt sich der Strömungseinsatz 20 hier nicht bis zu einer Oberseite des Strömungsabschnitts 10, sodass an einer Oberseite des Strömungseinsatzes 20 gegenüberliegend von dem Strömungseinlass 24 eine hier nicht gezeigte Strömungsöffnung vorgesehen sein kann. Der Strömungseinsatz 20 kann also an der Oberseite offen sein, sodass dort der Medienstrom 1 ausströmen kann.

Figur 6 zeigt in einer perspektivischen Ansicht das hier erläuterte Prinzip der Anströmung eines sehr breiten Brennstoffzellenstapels 40 mittels eines Strömungseinsatzes 20 mit umlaufenden Strömungsausnehmungen 22 mit dem Medienstrom 1, wobei hier der Strömungsabschnitt 10 nicht explizit gezeigt ist.

Die voranstehenden Erläuterungen der Ausführungsformen beschreiben die vorliegende Erfindung ausschließlich im Rahmen von Beispielen. Es können Kombinationen der einzelnen Ausführungsformen vorgesehen werden.

### Bezugszeichenliste

- 1: Medienstrom
- 10: Strömungsabschnitt
- 12: Innenwandung
- 14: zweites Strömungsleitelement
- 20: Strömungseinsatz
- 21: Strömungseinsatz-Seite
- 22: Strömungsausnehmung
- 24: Strömungseinlass
- 26: erstes Strömungsleitelement
- 27: Strömungsschlitz
- 28: Innenkante
- 30: Strömungsanordnung
- 40: Brennstoffzellenstapel

## Patentansprüche

1. Brennstoffzellensystem (50) mit einem Brennstoffzellenstapel (40) und einer Strömungsanordnung (30) zum Zuführen eines Medienstroms (1) zum Brennstoffzellenstapel (40), wobei die Strömungsanordnung (30) einen strömungstechnisch mit dem Brennstoffzellenstapel (40) verbundenen Strömungsabschnitt (10) aufweist, die Strömungsanordnung (30) ferner einen in dem Strömungsabschnitt (10) angeordneten Strömungseinsatz (20) aufweist, welcher sich mit seiner Haupterstreckungsrichtung entlang des Strömungsabschnittes (10) erstreckt, einen Strömungseinlass (24) zum Einlassen des Medienstroms (1) aufweist und zumindest eine Strömungsausnehmung (22) aufweist, welche an einer dem Brennstoffzellenstapel (40) abgewandten Strömungseinsatz-Seite (21) des Strömungseinsatzes (20) ausgebildet ist, **dadurch gekennzeichnet, dass** die dem Brennstoffzellenstapel (40) abgewandten Strömungseinsatz-Seite (21) entlang der Haupterstreckungsrichtung des Strömungseinsatzes (20) zum Brennstoffzellenstapel (40) hin geneigt ist.

2. Brennstoffzellensystem (50) nach Anspruch 1, **dadurch gekennzeichnet, dass** die zumindest eine Strömungsausnehmung (22) auf eine Innenwandung (12) des Strömungsabschnitts (10) ausgerichtet ist.

3. Brennstoffzellensystem (50) nach Anspruch 1 oder 2, **dadurch gekennzeichnet, dass** die zumindest eine Strömungsausnehmung (22) ihrer Länge nach entlang der Haupterstreckungsrichtung des Strömungseinsatzes (20) erstreckt ist.

4. Brennstoffzellensystem (50) nach einem der voranstehenden Ansprüche, **dadurch gekennzeichnet, dass** mehrere Strömungsausnehmungen (22) in dem Strömungseinsatz (20) ausgebildet sind, welche entlang der Haupterstreckungsrichtung des Strömungseinsatzes (20) voneinander beabstandet sind.

5. Brennstoffzellensystem (50) nach einem der voranstehenden Ansprüche, **dadurch gekennzeichnet, dass** an dem Strömungseinsatz (20) zumindest ein erstes Strömungsleitelement (26) angeordnet ist, welches von der zumindest einen Strömungsausnehmung (22) nach innerhalb des Strömungseinsatzes (20) erstreckt ist.

6. Brennstoffzellensystem (50) nach Anspruch 5, **dadurch gekennzeichnet, dass** das zumindest eine erste Strömungsleitelement (26) einen von innerhalb des Strömungseinsatzes (20) zu der zumindest einen Strömungsausnehmung (22) führenden Strömungsschlitz (27) ausbildet.

7. Brennstoffzellensystem (50) nach Anspruch 6, **dadurch gekennzeichnet, dass** der Strömungsschlitz (27) im Wesentlichen durchgehend innerhalb des Strömungsabschnitts (10) entlang der Haupterstreckungsrichtung des Strömungseinsatzes (20) ausgebildet ist.

8. Brennstoffzellensystem (50) nach Anspruch 6 oder 7, **dadurch gekennzeichnet, dass** der Strömungsschlitz (27) entlang der Haupterstreckungsrichtung des Strömungseinsatzes (20) in Richtung zum Strömungsabschnitt (10) geneigte Innenkanten (28) aufweist.

9. Brennstoffzellensystem (50) nach einem der voranstehenden Ansprüche, **dadurch gekennzeichnet, dass** an der zumindest einen Strömungsausnehmung (22) zumindest ein zweites Strömungsleitelement (14) zum Erzeugen eines um zumindest einen Teil des Strömungseinsatzes (20) herum und zum Brennstoffzellenstapel (40) führenden Strömungswirbels des Medienstroms (1) ausgebildet ist.

10. Brennstoffzellensystem (50) nach einem der voranstehenden Ansprüche, **dadurch gekennzeichnet, dass** in dem Strömungseinsatz (20) quer zu der Haupterstreckungsrichtung des Strömungseinsatzes (20) mehrere Strömungsausnehmungen (22) ausgebildet sind.

11. Brennstoffzellensystem (50) nach einem der voranstehenden Ansprüche, **dadurch gekennzeichnet, dass** die zumindest eine Strömungsausnehmung (22) als ein Schlitz und/oder eine Perforierung in dem Strömungseinsatz (20) ausgebildet ist.

12. Brennstoffzellensystem (50) nach einem der voranstehenden Ansprüche, **dadurch gekennzeichnet, dass** der Strömungsabschnitt (10) und/oder der Strömungseinsatz (20) ein Rohr ist.

13. Brennstoffzellensystem (50) nach einem der voranstehenden Ansprüche, **dadurch gekennzeichnet, dass** der Strömungseinsatz (20) konzentrisch zum Strömungsabschnitt (10) angeordnet ist.

14. Brennstoffzellensystem (50) nach einem der voranstehenden Ansprüche, **dadurch gekennzeichnet, dass** der Strömungsabschnitt (30) an einer Luftseite oder an einer Brennstoffseite des Brennstoffzellenstapels (40) angeordnet ist.

## Claims

1. A fuel cell system (50) comprising a fuel cell stack (40) and a flow arrangement (30) for supplying a media flow (1) to the fuel cell stack (40), wherein the flow arrangement (30) comprises a flow section (10) fluidically connected to the fuel cell stack (40), the flow arrangement (30) further comprises a flow insert (20) arranged in the flow section (10), which extends with its main direction of extension along the flow section (10), has a flow inlet (24) for admitting the media flow (1), and has at least one flow recess (22) formed on a flow insert side (21) of the flow insert (20) facing away from the fuel cell stack (40), **characterized in that** the flow insert side (21) facing away from the fuel cell stack (40) is inclined along the main extension direction of the flow insert (20) towards the fuel cell stack (40).

2. Fuel cell system (50) according to claim 1, **characterized in that** the at least one flow recess (22) is aligned with an inner wall (12) of the flow section (10).

3. Fuel cell system (50) according to claim 1 or 2, **characterized in that** the at least one flow recess (22) extends lengthwise along the main extension direction of the flow insert (20).

4. Fuel cell system (50) according to one of the preceding claims, **characterized in that** a plurality of flow recesses (22) are formed in the flow insert (20), which are spaced apart from one another along the main extension direction of the flow insert (20).

5. Fuel cell system (50) according to one of the preceding claims, **characterized in that** at least one first flow guide element (26) is arranged on the flow insert (20), which extends from the at least one flow recess (22) to within the flow insert (20).

6. Fuel cell system (50) according to claim 5, **characterized in that** the at least one first flow guide element (26) forms a flow slot (27) leading from within the flow insert (20) to the at least one flow recess (22).

7. Fuel cell system (50) according to claim 6, **characterized in that** the flow slot (27) is formed substantially continuously within the flow section (10) along the main extension direction of the flow insert (20).

8. Fuel cell system (50) according to claim 6 or 7, **characterized in that** the flow slot (27) has inner edges (28) inclined along the main extension direction of the flow insert (20) in the direction of the flow section (10).

9. Fuel cell system (50) according to one of the preceding claims, **characterized in that** at least one second flow guide element (14) is formed on the at least one flow recess (22) for generating a flow vortex of the media flow (1) around at least a portion of the flow insert (20) and leading to the fuel cell stack (40).

10. Fuel cell system (50) according to one of the preceding claims, **characterized in that** a plurality of flow recesses (22) are formed in the flow insert (20) transversely to the main extension direction of the flow insert (20).

11. Fuel cell system (50) according to one of the preceding claims, **characterized in that** the at least one flow recess (22) is formed as a slot and/or a perforation in the flow insert (20).

12. Fuel cell system (50) according to one of the preceding claims, **characterized in that** the flow section (10) and/or the flow insert (20) is a tube.

13. Fuel cell system (50) according to one of the preceding claims, **characterized in that** the flow insert (20) is arranged concentrically to the flow section (10).

14. Fuel cell system (50) according to one of the preceding claims, **characterized in that** the flow section (30) is arranged on an air side or on a fuel side of the fuel cell stack (40).

## Revendications

1. Système de pile à combustible (50) comprenant un empilement de piles à combustible (40) et un agencement d'écoulement (30) pour fournir un flux de fluide (1) à l'empilement de piles à combustible (40), l'agencement d'écoulement (30) comprenant une section d'écoulement (10) en communication fluidique avec l'empilement de piles à combustible (40), l'agencement d'écoulement (30) comprenant en outre un insert d'écoulement (20) disposé dans la section d'écoulement (10), qui s'étend avec sa direction d'extension principale le long de la section d'écoulement (10), comporte une entrée d'écoulement (24) pour l'admission du flux de fluide (1), et comporte au moins un évidement d'écoulement (22) formé sur un côté d'insert d'écoulement (21) de l'insert d'écoulement (20) opposé à l'empilement de piles à combustible (40), **caractérisé en ce que** le côté de l'insert d'écoulement (21) faisant face à l'empilement de piles à combustible (40) est incliné le long de la direction d'extension principale de l'insert d'écoulement (20) vers l'empilement de piles à combustible (40).

2. Système de pile à combustible (50) selon la revendication 1, **caractérisé en ce que** l'au moins un évidement d'écoulement (22) est aligné avec une paroi intérieure (12) de la section d'écoulement (10).

3. Système de pile à combustible (50) selon la revendication 1 ou 2, **caractérisé en ce que** l'au moins un évidement d'écoulement (22) s'étend dans le sens de la longueur le long de la direction d'extension principale de l'insert d'écoulement (20).

4. Système de pile à combustible (50) selon l'une des revendications précédentes, **caractérisé en ce que** plusieurs évidements d'écoulement (22) sont formés dans l'insert d'écoulement (20), espacés les uns des autres le long de la direction d'extension principale de l'insert d'écoulement (20).

5. Système de pile à combustible (50) selon l'une des revendications précédentes, **caractérisé en ce qu'**au moins un premier élément de guidage d'écoulement (26) est disposé sur l'insert d'écoulement (20), lequel s'étend depuis au moins un évidement d'écoulement (22) jusqu'à l'intérieur de l'insert d'écoulement (20).

6. Système de pile à combustible (50) selon la revendication 5, **caractérisé en ce que** le ou les premiers éléments de guidage d'écoulement (26) forment une fente d'écoulement (27) menant de l'intérieur de l'insert d'écoulement (20) à l'au moins un évidement d'écoulement (22).

7. Système de pile à combustible (50) selon la revendication 6, **caractérisé en ce que** la fente d'écoulement (27) est formée de manière sensiblement continue dans la section d'écoulement (10) le long de la direction d'extension principale de l'insert d'écoulement (20).

8. Système de pile à combustible (50) selon la revendication 6 ou 7, **caractérisé en ce que** la fente d'écoulement (27) présente des bords intérieurs (28) inclinés le long de la direction d'extension principale de l'insert d'écoulement (20) dans la direction de la section d'écoulement (10).

9. Système de pile à combustible (50) selon l'une des revendications précédentes, **caractérisé en ce qu'**au moins un second élément de guidage d'écoulement (14) est formé sur l'au moins un évidement d'écoulement (22) pour générer un tourbillon d'écoulement du fluide (1) autour d'au moins une partie de l'insert d'écoulement (20) et menant à l'empilement de piles à combustible (40).

10. Système de pile à combustible (50) selon l'une des revendications précédentes, **caractérisé en ce que** plusieurs évidements d'écoulement (22) sont formés dans l'insert d'écoulement (20) transversalement à la direction d'extension principale de l'insert d'écoulement (20).

11. Système de pile à combustible (50) selon l'une des revendications précédentes, **caractérisé en ce que** le ou les renfoncements d'écoulement (22) sont formés sous forme de fente et/ou de perforation dans l'insert d'écoulement (20).

12. Système de pile à combustible (50) selon l'une des revendications précédentes, **caractérisé en ce que** la section d'écoulement (10) et/ou l'insert d'écoulement (20) est un tube.

13. Système de pile à combustible (50) selon l'une des revendications précédentes, **caractérisé en ce que** l'insert d'écoulement (20) est disposé concentriquement à la section d'écoulement (10).

14. Système de pile à combustible (50) selon l'une des revendications précédentes, **caractérisé en ce que** la section d'écoulement (30) est disposée côté air ou côté combustible de la pile à combustible (40).
